(19) **Europäisches Patentamt**
**European Patent Office**
**Office européen des brevets**

(11) **EP 2 618 305 B1**

(12) **EUROPÄISCHE PATENTSCHRIFT**

(45) Veröffentlichungstag und Bekanntmachung des Hinweises auf die Patenterteilung:
**30.04.2014 Patentblatt 2014/18**

(51) Int Cl.:
***G06T 7/00*** *(2006.01)*

(21) Anmeldenummer: **12151945.8**

(22) Anmeldetag: **20.01.2012**

(54) **Verfahren und Vorrichtung zur Online-Kalibrierung von Fahrzeug-Kameras**

Method and device for online calibration of vehicle cameras

Procédé et dispositif de calibrage en ligne de caméras de véhicules

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.07.2013 Patentblatt 2013/30**

(73) Patentinhaber: **ESG Elektroniksystem- und Logistik-GmbH**
**82256 Fürstenfeldbruck (DE)**

(72) Erfinder:
• **Pflug, Christopher**
**85241 Hebertshausen-Unterweilbach (DE)**
• **Platonov, Juri**
**82031 Grünwald (DE)**
• **Kaczmarczyk, Pawel**
**80801 München (DE)**
• **Gebauer, Thomas**
**80333 München (DE)**

(74) Vertreter: **Betten & Resch**
**Theatinerstrasse 8**
**80333 München (DE)**

(56) Entgegenhaltungen:
**EP-A1- 1 498 689      DE-A1-102010 021 221**

• **M MIKSCH ET AL: "Homography-Based Extrinsic Self-Calibration for Cameras in Automotive Applications", WORKSHOP ON INTELLIGENT TRANSPORTATION 2010, 1. März 2010 (2010-03-01), Seiten 17-22, XP55030562,**
• **RULAND T ET AL: "Hand-eye autocalibration of camera positions on vehicles", INTELLIGENT TRANSPORTATION SYSTEMS (ITSC), 2010 13TH INTERNATIONAL IEEE CONFERENCE ON, IEEE, PISCATAWAY, NJ, USA, 19. September 2010 (2010-09-19), Seiten 367-372, XP031792805, ISBN: 978-1-4244-7657-2**
• **NISTER D ET AL: "Visual odometry", PROCEEDINGS OF THE 2004 IEEE COMPUTER SOCIETY CONFERENCE ON COMPUTER VISION AND PATTERN RECOGNITION 27 JUNE-2 JULY 2004 WASHINGTON, DC, USA, PROCEEDINGS OF THE 2004 IEEE COMPUTER SOCIETY CONFERENCE ON COMPUTER VISION AND PATTERN RECOGNITION IEEE COMP, Bd. 1, 27. Juni 2004 (2004-06-27), Seiten 652-659, XP010708622, DOI: 10.1109/CVPR.2004.1315094 ISBN: 978-0-7695-2158-9**

EP 2 618 305 B1

**Beschreibung**

Die Erfindung betrifft ein Verfahren und eine Vorrichtung zur Ermittlung der Orientierung einer an einem Fahrzeug angebrachten Videokamera relativ zum Fahrzeugkoordinatensystem, d.h. einer automatischen Kamera-zu-Fahrzeug Kalibrierung (im Folgenden Online-Calibration).

Die Ermittlung der Kameraorientierung bzgl. eines Fahrzeugs findet heute im Rahmen einer sogenannten End-of-line Kalibrierung statt. Dabei handelt es sich um ein dediziertes Hardware-Setup am Ende des Produktionszyklusses eines Fahrzeugs.

Das Prozedere ist gleichermaßen unflexibel wie kostspielig. Der größte Nachteil dieser starren Kalibrierungsprozedur besteht in der Annahme, die Kameraorientierung ändere sich nicht während der Fahrzeugnutzung durch den Endanwender (Fahrer). Tatsächlich führen aber mechanische Belastungen und Temperatureinflüsse zu einer Dekalibrierung, d.h. zu einer Diskrepanz zwischen den tatsächlichen und den in der Fabrik ermittelten Werten. Es besteht also das technische Problem, dass eine in der Praxis eines Kraftfahrzeuges auftretende Dekalibrierung des Kamerasystems (durch Auswirkung von mechanischen Belastungen und Temperatureinflüssen auf die Fahrzeugkarosserie), welche sich in einer ungenauen bzw. falschen Lage der Kamera relativ zum Fahrzeug und damit in ungenauen bzw. falschen Eingabedaten für beispielsweise ein Fahrassistenzsystem (ADAS) darstellt.

Aus diesem Grund haben die Fahrzeughersteller großes Interesse daran, die End-of-line Kalibrierung durch eine vollautomatische Kalibrierung beim Endanwender zu ergänzen oder zu ersetzen.

Ziel der Erfindung ist daher eine solch vollautomatische Kalibrierung, sowie ferner, dass die auftretende Dekalibrierung selbsttätig während der Fahrt korrigiert wird. Bereits existierende Verfahren zur Online-Kalibrierung basieren entweder auf der Detektion der Fahrbahnmarkierungen oder sind darauf angewiesen, Merkmale (sog. Features) auf der Fahrbahn zu detektieren. Während die erst genannten Verfahren eine starke Einschränkung der zur Kalibrierung geeigneten Umgebungen darstellen, neigen die zuletzt genannten Verfahren zur Fehleranfälligkeit, da einerseits die Annahme der flachen Fahrbahn in einer bestimmten Bildregion nicht immer erfüllt ist und andererseits die wenig ausgeprägte Asphalttextur eine eher ungünstige Umgebung aus der Sicht der Merkmalsextraktion ist.

Auf der Detektion von Fahrbahnmarkierungen basierende Konzepte sind beispielsweise beschrieben in Á. Catalá-Prat, J. Rataj, and R. Reulke, Selfcalibration system for the orientation of a vehicle camera, in Proc. of the ISPRS Com. V Symposium: Image Engineering and Vision Metrology, 2006, pp. 68-73, sowie in S. Hold, S. Gormer, A. Kummert, M. Meuter, and S. Muller-Schneiders, A novel approach for the online initial calibration of extrinsic parameters for a car-mounted camera, in Intelligent Transportation Systems, 2009. ITSC'09. 12th Inter- national IEEE Conference on, IEEE, 2009, pp. 1-6., oder in M. Wu and X. An, An automatic extrinsic parameter calibration method for camera-on-vehicle on structured road, in Vehicular Electronics and Safety, 2007. IC- VES. IEEE International Conference on, IEEE, 2007, pp. 1-5.

Das in M. Miksch, B. Yang, and K. Zimmermann, Homography-based extrinsic selfcalibration for cameras in automotive applications, in Workshop on Intelligent Transportation, 2010, pp. 17-22, beschriebene System verwendet die natürliche Textur der Fahrbahn für die Kalibrierung, geht aber von der flachen Fahrbahn aus, deren Lage im Bild bekannt sein muss und ist auf die Fahrzeugodometrie angewiesen.

Es ist daher eine Aufgabe der Erfindung, ein Verfahren und eine Vorrichtung zur Online-Kalibrierung zu schaffen, dass ohne die Nachteile des geschilderten Stands der Technik auskommt.

Gemäß einem Ausführungsbeispiel wird ein Verfahren zur Ermittlung der Orientierung einer an einem Fahrzeug angebrachten Videokamera relativ zum Fahrzeugkoordinatensystem bereitgestellt, aufweisend:

Messen einer inkrementellen Fahrzeugbewegung im Koordinatensystem der Videokamera basierend auf dem optischen Fluss des Videostroms der Videokamera; Repräsentation der inkrementellen Fahrzeugbewegung durch eine Bewegung bestehend aus einer linearen Bewegungskomponente und einer Drehbewegung, wobei die lineare Bewegungskomponente mittels einem Richtungsvektor repräsentiert wird und wobei die Drehbewegung mittels einer Drehachse und einem Drehwinkel repräsentiert wird;

Klassifikation der gemessenen inkrementellen Fahrzeugbewegung als geradlinige Bewegung oder als Rotationsbewegung basierend auf dem ermittelten Drehwinkel;

Messung mindestens einer als geradlinige Bewegung klassifizierten inkrementellen Bewegung;

Messung mindestens einer als Rotationsbewegung klassifizierten inkrementellen Bewegung; und

Verwendung des Richtungsvektors der mindestens einen gemessenen geradlinigen Bewegung zur Schätzung der Fahrzeuglängsachse;

Verwendung der Drehachse der mindestens einen gemessenen Rotationsbewegung zur Schätzung der Normalen zur Fahrzeugebene, so dass sich die Ausrichtung der Kamera relativ zum Fahrzeugkoordinatensystem aus der jeweils im Koordinatensystem der Kamera ermittelten Fahzeuglängsachse und der ermittelten Normalen zur Fahrzeugebene ergibt.

Durch Verwendung von Daten lediglich der visuellen Odometrie kann auf weitere Informationsquellen verzichtet werden. Die Verwendung dieser Daten zur Online-Kalibrierung wird ermöglicht durch Verwendung eines vergleichsweise einfachen Modells der Fahrzeugbewegung, das eine gemessene Bewegung in Rotationsbewegung oder geradlinige Bewegung klassifiziert und dann basierend darauf aus der gemessenen Bewegung direkt eine Schätzung der Fahrzeuglängsachse oder der Fahrzeugnormalen ermittelt.

Gemäß einem Ausführungsbeispiel weist das Verfahren ferner auf:

Durchführen mehrerer Messungen inkrementeller Fahrzeugbewegungen;
Verwenden der mehreren Schätzungen der Fahrzeuglängsachse und der Normalen zum Ermitteln einer verbesserten Schätzung für die Fahrzeuglängsachse und die Normale.

Durch Einbeziehung mehrere Messungen in die Schätzung kann die Genauigkeit verbessert werden.

Gemäß einem Ausführungsbeispiel weist das Verfahren ferner auf:

falls der Drehwinkel der inkrementellen Fahrzeugbewegung kleiner ist als ein bestimmter Schwellwert, klassifizieren der Bewegung als geradlinige Bewegung; falls der Drehwinkel der inkrementellen Fahrzeugbewegung größer ist als ein bestimmter Schwellwert, klassifizieren der Bewegung als Rotationsbewegung.

Auf diese Weise kann eine Fahrzeugbewegung auf einfache Weise in eine der beiden Kategorien "geradlinige Bewegung" oder "Mannöverl Kurve/Drehbewegung" klassifiziert werden.

Gemäß einem Ausführungsbeispiel weist das Verfahren ferner auf:

Verwenden der Normalen zur Ebene der geradlinigen Bewegung oder der geradlinigen Bewegungskomponente als weitere Schätzung für die Normale zur Fahrzeugachse zusätzlich zur Drehachse;
Ermitteln einer Schätzung für die Normale zur Fahrzeugebene basierend auf einer Kombination der normalen zur ermittelten geradlinigen Bewegung oder Bewegungskomponente und der Drehachse der Drehbewegung.

Dadurch kann auch die Tatsache, dass auch die Ebene der geradlinigen Bewegung (über ihre Normale) Informationen über die Fahrzeugnormale und damit die Rotationsachse trägt, berücksichtigt werden.

Gemäß einem Ausführungsbeispiel wird die Kombination ermittelt basierend auf der Forderung, dass die Normale zur Ebene der aus der Messung ermittelten Linearbewegung oder -Bewegungskomponente und die Drehachse parallel sein sollen

Dies ermöglicht die Fusionierung der Daten der geradlinigen Bewegung und der Rotationsbewegung.

Gemäß einem Ausführungsbeispiel wird der Schätzwert für die Längsache des Fahrzeugs und die Fahrzeugnormale iterativ durch wiederholtes Messen der inkrementellen Fahrzeugbewegung ermittelt.

Dies verbessert die Genauigkeit der Schätzung.

Gemäß einem Ausführungsbeispiel weist das Verfahren ferner auf:

Ermitteln eines upgedateten Wertes für die Fahrzeugnormale durch Messung i als

$$l_c = \Lambda_{l_c}^{i-1} \sum_{n=0}^{i} (Q_t(l_c^n) + R_t(l_c^n))^{-1} l_c^n,$$

mit $\Lambda_{l_c}^{i} = \Lambda_{l_c}^{i-1} + (Q_t(l_c^i) + R_t(l_c^i))^{-1}$ als Gewichts- oder Informationsmatrix und mit $Q_t$ und $Q_r$ als Kovarianzmatrizen der mit Gaußschem Prozessrauschen behafteten linearen Fahrzeugachse bzw. der Fahrzeugnormalen.

Auf diese Weise kann ein vorteilhaftes Messmodell für die Schätzung implementiert werden.

Gemäß einem Ausführungsbeispiel weist eine Vorrichtung zur Ermittlung der Orientierung einer an einem Fahrzeug angebrachten Videokamera relativ zum Fahrzeugkoordinatensystem auf:

ein Modul zum Messen einer inkrementellen Fahrzeugbewegung im Koordinatensystem der Videokamera basierend auf dem optischen Fluss des Videostroms der Videokamera;
ein Modul zur Repräsentation der inkrementellen Fahrzeugbewegung durch eine Bewegung bestehend aus einer linearen Bewegungskomponente und einer Drehbewegung, wobei die Linearbewegung mittels einem Richtungsvektor repräsentiert wird und wobei die Drehbewegung mittels einer Drehachse und einem Drehwinkel repräsentiert wird;

ein Modul zur Klassifikation der gemessenen inkrementellen Fahrzeugbewegung als geradlinige Bewegung oder als Rotationsbewegung basierend auf dem ermittelten Drehwinkel;

ein Modul zur Messung mindestens einer als geradlinige Bewegung klassifizierten inkrementellen Bewegung;

ein Modul zur Messung mindestens einer als Rotationsbewegung klassifizierten inkrementellen Bewegung; und

ein Modul zur Verwendung des Richtungsvektors der mindestens einen gemessenen geradlinigen Bewegung als Schatzung der Fahrzeuglängsachse;

ein Modul zur Verwendung der Drehachse der mindestens einen gemessenen Rotationsbewegung als Schätzung der Normalen zur Fahrzeugebene, so dass sich die Ausrichtung der Kamera relativ zum Fahrzeugkoordinatensystem aus der jeweils im Koordinatensystem der Kamera ermittelten Fahzeuglängsachse und der ermittelten Normalen zur Fahrzeugachse ergibt.

Gemäß einem Ausführungsbeispiel weist die Vorrichtung ferner auf:

ein oder mehrere Module zur Durchführung eines Verfahrens gemäß einem der Ausführungsbeispiele der Erfindung.

Gemäß einem Ausführungsbeispiel wird ein Computerprogramm bereitgestellt, aufweisend: Computerprogrammcode, der, wenn er auf einem Computer ausgeführt wird, diesen in die Lage versetzt, ein Verfahren gemäß einem der Ausführungsbeispiele der Erfindung durchzuführen.

Nachfolgend wird die Erfindung anhand von Ausführungsbeispielen im Detail beschrieben.

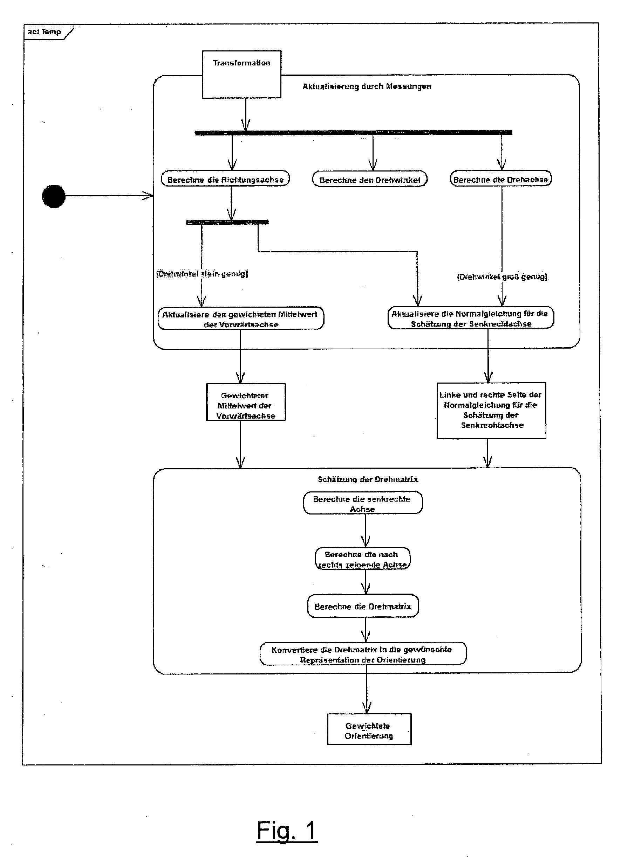

Dabei zeigt Fig. 1 den Ablauf einer Online-Kalibrierung gemäß einem Ausführungsbeispiel der Erfindung.

Gemäß einem Ausführungsbeispiel erfolgt zunächst eine Schätzung der Bewegung einer Videokamera (befestigt am Fahrzeug) auf Basis des sogenannten "Optischen Flusses" mittels Kamera-Videodaten (Bildfolgen). Hierzu kann die sogenannte "visuelle Odometrie" verwendet werden, wie sie z. B. beschrieben ist in D. Nistér, O. Naroditsky, and J. Bergen, Visual odometry, in Computer Vision and Pattern Recognition, 2004. CVPR 2004. Proceedings of the 2004 IEEE Computer Society Conference on, vol. 1, IEEE, 2004, pp. 1-652: Diese liefert dann - im Koordinatensystem der Kamera die Kamerabewegung in 5 Freiheitsgraden, d.h. Bewegungsrichtung und 3 Orientierungsparameter.

Mittels visueller Odometrie wird dann basierend auf dem optischen Fluss wiederholt (in wiederholten Messschritten oder Bewegungsschritten i) die Bewegung des Fahrzeugs ermittelt, d.h. es wird ermittelt um welchen Betrag sich das Fahrzeug in den 5 Freiheitsgraden bewegt hat.

Basierend davon wird dann mittels einem vergleichsweise einfachen Modell der Fahrzeugbewegung die Bewegung der Längsachse des Fahrzeugs und die senkrechte Fahrzeugachse (im Koordinatensystem der Kamera) ermittelt. Dies ergibt dann wiederum direkt die Orientierung der Kamera relativ zum Fahrzeugkoordinatensystem und somit die Online-Kalibrierung der Kamera.

Das verwendete Modell der Fahrzeugbewegung beruht gemäß einem Ausführungsbeispiel darauf, dass die mögliche Bewegung des Fahrzeugs in eine von zwei Bewegungsmustern klassifiziert wird, die jeweils typisch für eine urbane Umgebung sind, und zwar:

a) mindestens eine geradlinige Fahrzeugbewegung und

b) ein Manöver, bei dem eine Rotation (Kurve) um eine Rotationsachse gefahren wird

Die Ermittlung oder Entscheidung, ob eine Fahrzeugbewegung eine geradlinige Bewegung oder ein Manöver darstellt, kann beispielsweise anhand des gemessenen Rotationswinkels durchgeführt werden.

Wird eine ermittelte Bewegung des Fahrzeugs als zu einem der beiden Bewegungsmuster zugehörig ermittelt, so können dann für einen gemessenen Bewegungsschritt i folgende Informationen ermittelt werden:

1. Ermittlung der Bewegungsrichtung bei geradliniger Bewegung

2. Ermittlung der Rotationsachse bei einem Fahrmanöver

Eine weitere Annahme des Bewegungsmodells gemäß einem Ausführungsbeispiel besteht darin, dass die "geradlinige Bewegung" entlang der Längsachse des Fahrzeugs erfolgt. Der aus der visuellen Odometrie in einem Schritt i ermittelte Bewegungsvektor stellt also eine "Schätzung" für die Längsachse des Fahrzeugs (im Koordinatensystem der Kamera) dar. Gleichzeitig ergibt sich aus der Normalen zur Bewegungsebene der geradlinigen Bewegung eine Schätzung der Normalen/Senkrechten Achse des Fahrzeugs.

Eine andere Schätzung für die senkrechte Achse des Fahrzeugs ergibt sich aus einem als "Rotation" bzw. "Kurve" oder "Manöver" klassifizierten Bewegungsschritt.

Da eine Kurvenbewegung eine Rotation um eine Achse darstellt, die parallel zur senkrechten Achse des Fahrzeugs ist, enthalten also sowohl die für ein Manöver ermittelte Rotationsachse wie auch die Normale zur Ebene der linearen Bewegungskomponenteninformationen bezüglich der senkrechten Achse des Fahrzeugs. Diese beiden Informationen können dann "fusioniert" werden, z. B. indem z. B. bei der Suche einer Lösung der Forderung Rechnung getragen wird, dass die ermittelten Normale zur Ebene der linearen Bewegungskomponente und die ermittelte "Rotationsachse" für den Fall eines Manövers parallel sind. Die Drehachse der aus der visuellen Odometrie ermittelten Rotationsbewegung stellt eine Schätzung dieser senkrechten Achse dar.

In einem einzelnen Messchritt ergibt sich somit also aus der visuellen Odometrie bzw. dem optischen Fluss eine Schätzung des Vektors der geradlinigen Bewegung und damit der Längsachse des Fahrzeugs oder eine Schätzung der Rotationsachse und damit der Fahrzeugnormalen (jeweils im Koordinatensystem der Fahrzeugkamera).

Die Ermittlung der Schätzwerte kann wiederholt in wiederholten Messschritten durchgeführt werden und die Messgenauigkeit so erhöht werden, indem der Schätzwert aus der Auswertung der mehreren Messschritte ermittelt wird. Bei der Ermittlung der Fahrzeugnormalen können zudem die Messdaten der geradlinigen Bewegungskomponenten und der Rotationsbewegung fusioniert werden, indem nach Lösungen bzw. einer Lösung gesucht wird, bei der Normale der Bewegungsebene der geradlinigen Bewegung und Rotationsachse parallel sind.

Im Gegensatz zu den meisten anderen Verfahren wird grundsätzlich keinerlei Information der Fahrzeugsensorik benötigt (z.B. Geschwindigkeit), obwohl diese zur Erhöhung der Robustheit herangezogen werden kann. Auch Fahrbahnmarkierungen oder Fahrbantextur spielen keine Rolle.

Nachfolgend wird ein weiteres Ausführungsbeispiel der Erfindung beschrieben.

Auch hier basiert die Online-Kalibrierung auf der Bewegungsschätzung einer am Fahrzeug befestigten Videokamera unter Heranziehung des Videostroms eben dieser Kamera, sowie auf einfachen Fahrzeugbewegungsmodell. Dabei baut die Bewegungsschätzung auf dem sog. Optischen Fluss auf, d.h. einer Menge 2-dimensionaler Merkmale, die über die Zeit im Videostrom verfolgt werden, und dann eine Schätzung für die Bewegung der Merkmale ergibt.

Der Optische Fluss stellt eine sehr schwache Anforderung an die Umgebung dar, da lediglich das Vorhandensein punktförmiger Merkmale erwartet wird, was in einer gewöhnlichen Fahrzeugumgebung meistens gegeben ist. Des Weiteren wird nicht erwartet, dass die Merkmale auf einer Ebene, z.B. der Fahrbahn angeordnet sind.

Für eine erfolgreiche Kalibrierung ist mindestens eine geradlinige Fahrzeugbewegung und ein Manöver notwendig - ein Bewegungsmuster, das speziell in urbanen Umgebungen vorherrscht. Mehrere Bewegungen bzw. entsprechende Messungen können zur Erhöhung der Genauigkeit verwendet werden.

Im Kern basiert der Ansatz bei diesem Ausführungsbeispiel auf der Ermittlung der Bewegungsrichtung im lokalen Kamerakoordinatensystem bei einer geradlinigen Bewegung bzw. der Rotationsachse für den Fall einer Rotationsbewegung. Eine gemessene inkrementelle Fahrzeugbewegung wird dabei repräsentiert mittels des linearen Bewegungsvektors, der Drehachse und des Drehwinkels. Dann wird die Bewegung dahingehend klassifiziert, ob es sich um eine geradlinige Bewegung handelt oder um eine Drehbewegung.

Handelt es sich um eine geradlinige Bewegung, so entspricht die so ermittelte Achse der Längsachse des Fahrzeugs. Dies basiert auf der plausiblen Annahme, dass eine geradlinige Bewegung entlang der Längsachse des Fahrzeugs erfolgt.

Wird dagegen die Bewegung als Rotationsbewegung klassifiziert, so ergibt sich aus der Rotationsachse im lokalen Kamerakoordinatensystem die senkrechte Achse im Fahrzeugkoordinatensystem, die dieser entspricht. Dies basiert auf der ebenfalls plausiblen Annahme, dass eine Rotationsbewegung um die senkrechten Achse im Fahrzeugkoordinatensystem, d.h. um die Normale zur Fahrzeugebene (oder eine Parallele hierzu) erfolgt.

Zusätzlich kann aus den Bewegungsrichtungsvektoren im lokalen Kamerakoordinatensystem die Normale zur Bewegungsebene (der geradlinigen Bewegungskomponente) bestimmt werden, die dieselbe Information wie die Rotationsachse trägt und mit dieser fusioniert werden kann. Eine solche "Fusionierung" kann z. B. dadurch erfolgen, dass gefordert wird, dass die Rotationsachse und die Normale zur Ebene der linearen Bewegungskomponente parallel sein sollen und eine Lösung gesucht wurde, die diese Forderung erfüllt oder bestmöglich erfüllt. Auf diese Weise kann eine verbesserte Schätzung für die Fahrzeugnormale ermittelt werden, die nicht nur auf Basis der Rotationsachse sondern auch auf Basis der Normalen zur Ebene der geradlinigen Fahrzeugbewegung ermittelt wird.

Nachfolgend wird ein weiteres Ausführungsbeispiel der Erfindung im Detail beschrieben.

Auch in diesem Ausführungsbeispiel wird für die Durchführung der Online Calibration die Verfügbarkeit der Kamerabewegung in 5 Freiheitsgraden (Bewegungsrichtung und 3 Orientierungsparameter) vorausgesetzt, die mittels sog. Visueller Odometrie hergeleitet werden.

Das nachfolgend beschriebene Ausführungsbeispiel basiert dabei auf zwei (durchaus plausiblen) Annahmen:

1. Die dominante Bewegungsrichtung des Fahrzeugs ist koinzident mit der Längsachse des Fahrzeugs.
2. Die Bewegung des Fahrzeugs findet in einer dominanten Ebene statt.

Da die zu kalibrierende Videokamera starr mit dem Fahrzeug verbunden ist, unterliegt ihre Bewegung denselben Einschränkungen. Damit korrespondiert die dominante Bewegungsrichtung im lokalen Kamerakoordinatensystem mit der Längsachse des Fahrzeugs und die Normale zur dominanten Bewegungsebene im Kamerakoordinatensystem zur Senkrechtachse des Fahrzeugs.

In der Praxis weicht die Fahrzeugdynamik von der idealen ebenen Bewegung allerdings erheblich ab. So finden Orientierungsänderungen des Fahrzeugkoordinatensystems bzgl. der Straßenebene um alle Koordinatenachsen statt: Gieren, Nicken und Rollen. Außerdem finden translatorische Bewegungen entlang der vertikalen Achse statt, wenn auch ihre Amplitude gering relativ zur Amplitude der Vorwärts- und Seitwärtsbewegung ist. Diese Abweichungen von der idealen Bewegung und Drehung in einer Ebene werden im vorliegenden Ausführungsbeispiel durch Gaußsches Rauschen modelliert - das sog. Prozessrauschen.

Nachfolgend wird zunächst die (mathematisch-physikalische) Modellierung der gemessenen Bewegung beschrieben.

Es sei $T_c = [R_c|t_c]$ eine euklidische Transformation einer mit dem Fahrzeugs starr verbundenen Videokamera zwischen zwei Zeitpunkten $t_{n-1}$ und $t_n$. Dabei ist $R_c$ eine Drehmatrix in $R_3$, $t_c$ - ein Translationsvektor ebenfalls in $R_3$ und $[R_c|t_c]$ - eine Matrixkonkatenation. Damit ist $T_c$ eine $3\times4$-Matrix. Die Drehmatrix $R_c$ kann in eine Drehachse $r_c$ und einen Drehwinkel $\boldsymbol{0_c}$ um diese Drehachse zerlegt werden (z.B. mittels der Rodrigues- Formel). Damit repräsentiert der Translationsvektor $t_c$ die Bewegungsrichtung und die Drehachse $\boldsymbol{R_c}$ die Ebene der Fahrzeugbewegung im Kamerakoordinatensystem. Ist $\theta_c \approx 0$, so ist die Translationsachse $t_c$ - bis auf eine evtl. Bewegungskomponente senkrecht zur Strassenebene - koinzident mit der Längsachse des Fahrzeugs. Man kann also schreiben

$$t_c = \tilde{t}_c + q_{t}$$

wobei $t_c$ die Längsachse des Fahrzeugs im Kamerakoordinatensystem und $q_t$ das auditive Gaußsche Prozessrauschen mit Erwartungswert 0 und Kovarianzmatrix $Q_t$ darstellen. Ist hingegen $\theta_c \gg 0_t$, so kann mit hoher Wahrscheinlichkeit von einem Manöver ausgegangen werden, wobei rc die Manöverebene definiert. Man schreibt wieder

$$r_c = \hat{r}_c + q_r,$$

mit $P_c$ als vertikale Fahrzeugachse im Kamerakoordinatensystem und $q_r$ als Gaußsches Prozessrauschen mit Erwartungswert 0 und Kovarianzmatrix $Q_r$. Gelingt es nun $t_c$ und $f_c$ zu schätzen, kann die Orientierung des Kamerakoordinatensystems bzgl. des Fahrzeugkoordinatensystems hergeleitet werden.

Nachfolgend wird das Messmodell des Ausführungsbeispiels genauer beschrieben.

Als eine Messung wird die räumliche euklidische Transformation $T_c^i$ zwischen zwei Zeit- punkten $t_{i-1}$ und $t_i$ im Kamerakoordinatensystem angesehen. Diese Transformation kann aus dem Videostrom z.B. mittels der sog. Visuellen Odometrie aus dem optischen Fluss berechnet werden. Aus $T_c^i$ wird dann der Richtungsvektor $t_c^i$, die Drehachse $r_c^i$ und der Winkel $\theta_c^i$ bestimmt. Jede Messung wird als verrauscht angenommen mit Erwartungswert 0 und Kovarianzmatrizen $R_c$ bzw. $R_r$.

Nachfolgend wird die Schätzung der Kameraorientierung bzgl. des Fahrzeugs genauer beschrieben.

Die Abbildung 1 veranschaulicht dabei die interne Reihenfolge der Algorithmenschritte. Nachdem aus der Messung $T_c^i$ der Richtungsvektor $t_c^i$, die Drehachse $r_c^i$ und der Drehwinkel $\theta_c^i$ extrahiert wurden, ist zu überprüfen, ob es sich um eine geradlinige Bewegung oder um einen Manöver (d. h. eine Drehbewegung bzw. Kurve) handelt. Dazu wird der Drehwinkel $\theta_c^i$ mit zwei Schwellwerten mlow und mhigh verglichen. Ist $\theta ci$ < mlow, wird von einer geradlinigen Bewegung ausgegangen. Ist hingegen $\theta ci$ > mhigh, so liegt ein Manöver vor.

Die beiden Schwellwerte können beispielsweise durch die empirische Analyse der Fahrzeugdynamik gewonnen werden. Gemäß einem Ausführungsbeispiel werden z. B. für mlow 2 Grad/Sekunde verwendet, für mhigh 10 Grad/Sekunde. Dabei erfolgt eine Normierung auf die Abtastrate der Videokamera.

Liegt eine geradlinige Bewegung vor, wird die Aktualisierung der durchschnittlichen Längsachse des Fahrzeugs im Kamerakoordinatensystem - $t_c$ - durchgeführt:

$$\Lambda_{t_c}^i = \Lambda_{t_c}^{i-1} + (Q_t(t_c^i) + R_t(t_c^i))^{-1} \qquad (1)$$

$$t_c = \Lambda_{t_c}^{i-1} \sum_{m=0}^{i} (Q_t(t_c^m) + R_t(t_c^m))^{-1} t_c^m. \qquad (2)$$

wobei $\Lambda$ die sog. Gewichts- oder Informationsmatrix ist.

Im Fall eines Manövers findet die Aktualisierung der senkrechten Fahrzeugachse statt (up-vector). Dabei wird gefordert, dass der up-vector senkrecht zu allen Richtungsvektoren ist

$$n^T t_c^i = 0, \text{ für alle i}$$

und gleichzeitig parallel zu allen gesammelten Rotationsachsen:

$$r_c^i = n \qquad \text{für alle i.}$$

Diese Forderungen können in einem linearen Gleichungssystem der Form *An = b* zum Ausdruck gebracht werden, mit

$$A = \begin{pmatrix} t_c^{0^T} \\ \vdots \\ t_c^{r^T} \\ I^0 \\ \vdots \\ I^i \end{pmatrix}, \qquad (3)$$

$$b = \begin{pmatrix} 0^0 \\ \vdots \\ 0^i \\ r_c^0 \\ \vdots \\ r_c^i \end{pmatrix} \qquad (4)$$

und I als 3 $\times$ 3-Einheitsmatrix.

Nach der Ermittlung des up-vectors liegen nun zwei Fahrzeugachsen im Kamerakoordinatensystem vor, womit die Orientierung der Kamera zum Fahrzeug eindeutig definiert ist.

Fig. 1 illustriert schematisch den Ablauf des Ausführungsbeispiels.

Aus der Transformation des Mess-Updates werden die Richtung des Bewegungsvektors, der Drehwinkel und die Drehachse ermittelt. Ist der Drehwinkel kleiner als der Schwellwert, so wird der Richtungsvektor basierend auf der Messung upgedated. Ist der Drehwinkel größer als der Schwellwert, so erfolgt ein Update des Gleichungssystems für den Up-Vektor (=der Schätzwert der Fahrzeug-Senkrechten).

Dies wird für die linkshändige Seite und die rechtshändige Seite des Up-Vektors durchgeführt. Dann wird die Achse des Up-Vektors daraus berechnet.

Schließlich wird die noch fehlende "rechte Achse" bzw. "nach rechts zeigende Achse" des Fahrzeugkoordinatensystems im Koordinatensystem der Kamera berechnet, die Rotationsmatrix für die Rotation des Kamerakoordinatensystems in das Koordinatensystem des Fahrzeugs ermittelt und dann abschließend in einer beliebigen Repräsentation dargestellt.

Auf diese Weise ergibt sich dann eine gewichtete Schätzung der Orientation der Kamera relativ zum Koordinatensystem des Fahrzeugs.

Dem Fachmann ist klar, dass die Ausführungsbeispiele der Erfindung insbesondere implementiert werden können durch einen geeignet programmierten Rechner, der die von der Videokamera gelieferten Bilder verarbeitet und so die Schätzung der Orientierung ermittelt bzw. durchführt.

### Patentansprüche

1. Verfahren zur Ermittlung der Orientierung einer an einem Fahrzeug angebrachten Videokamera relativ zum Fahrzeugkoordinatensystem:

    Messen einer inkrementellen Fahrzeugbewegung im Koordinatensystem der Videokamera basierend auf dem optischen Fluss des Videostroms der Videokamera;
    Repräsentation der inkrementellen Fahrzeugbewegung durch eine Bewegung bestehend aus einer linearen Bewegungskomponente und einer Drehbewegung, wobei die lineare Bewegungskomponente mittels einem Richtungsvektor repräsentiert wird und wobei die Drehbewegung mittels einer Drehachse und einem Drehwinkel repräsentiert wird;
    Klassifikation der gemessenen inkrementellen Fahrzeugbewegung als geradlinige Bewegung oder als Rotationsbewegung basierend auf dem ermittelten Drehwinkel;
    Messung mindestens einer als geradlinige Bewegung klassifizierten inkrementellen Bewegung;
    Messung mindestens einer als Rotationsbewegung klassifizierten inkrementellen Bewegung; und
    Verwendung des Richtungsvektors der mindestens einen gemessenen geradlinigen Bewegung zur Schätzung der Fahrzeuglängsachse;
    Verwendung der Drehachse der mindestens einen gemessenen Rotationsbewegung zur Schätzung der Normalen zur Fahrzeugebene, so dass sich die Ausrichtung der Kamera relativ zum Fahrzeugkoordinatensystem aus der jeweils im Koordinatensystem der Kamera ermittelten Fahrzeuglängsachse und der ermittelten Normalen zur Fahrzeugebene ergibt.

2. Verfahren nach Anspruch 1, ferner aufweisend:

    Durchführen mehrerer Messungen inkrementeller Fahrzeugbewegungen;
    Verwenden der mehreren Schätzungen der Fahrzeuglängsachse und der Normalen zum Ermitteln einer verbesserten Schätzung für die Fahrzeuglängsachse und die Normale.

3. Verfahren nach Anspruch 1 oder 2, ferner aufweisend:

    falls der Drehwinkel der inkrementellen Fahrzeugbewegung kleiner ist als ein bestimmter Schwellwert, klassifizieren der Bewegung als geradlinige Bewegung;
    falls der Drehwinkel der inkrementellen Fahrzeugbewegung größer ist als ein bestimmter Schwellwert, klassifizieren der Bewegung als Rotationsbewegung.

4. Verfahren nach einem der vorhergehenden Ansprüche, aufweisend:

    Verwenden der Normalen zur Ebene der geradlinigen Bewegung oder der geradlinigen Bewegungskomponente als weitere Schätzung für die Normale zur Fahrzeugachse zusätzlich zur Drehachse;
    Ermitteln einer Schätzung für die Normale zur Fahrzeugebene basierend auf einer Kombination der Normalen zur ermittelten geradlinigen Bewegung oder Bewegungskomponente und der Drehachse der Drehbewegung.

5. Verfahren nach Anspruch 4, wobei
die Kombination ermittelt wird basierend auf der Forderung, dass die Normale zur Ebene der aus der Messung ermittelten Linearbewegung oder Bewegungskomponente und die Drehachse parallel sein sollen.

**6.** Verfahren nach einem der vorhergehenden Ansprüche, wobei der Schätzwert für die Längsache des Fahrzeugs und die Fahrzeugnormale iterativ durch wiederholtes Messen der inkrementellen Fahrzeugbewegung ermittelt wird.

**7.** Verfahren nach Anspruch 6, aufweisend:

Ermitteln eines upgedateten Wertes für die Fahrzeugnormale durch Messung i als

$$\hat{t}_c = \Lambda_{t_c}^{i-1} \sum_{n=0}^{i} (Q_t(t_c^n) + R_t(t_c^n))^{-1} t_c^n,$$

mit $\Lambda_{t_c}^i = \Lambda_{t_c}^{i-1} + (Q_t(t_c^i) + R_t(t_c^i))^{-1}$ als Gewichts- oder Informationsmatrix und mit $Q_t$ und $Q_r$ als Kovarianzmatrizen der mit Gaußschem Prozessrauschen behafteten linearen Fahrzeugachse bzw. der Fahrzeugnormalen.

**8.** Vorrichtung zur Ermittlung der Orientierung einer an einem Fahrzeug angebrachten Videokamera relativ zum Fahrzeugkoordinatensystem, aufweisend:

ein Modul zum Messen einer inkrementellen Fahrzeugbewegung im Koordinatensystem der Videokamera basierend auf dem optischen Fluss des Videostroms der Videokamera;
ein Modul zur Repräsentation der inkrementellen Fahrzeugbewegung durch eine Bewegung bestehend aus einer linearen Bewegungskomponente und einer Drehbewegung, wobei die lineare Bewegungskomponente mittels einem Richtungsvektor repräsentiert wird und wobei die Drehbewegung mittels einer Drehachse und einem Drehwinkel repräsentiert wird;
ein Modul zur Klassifikation der gemessenen inkrementellen Fahrzeugbewegung als geradlinige Bewegung oder als Rotationsbewegung basierend auf dem ermittelten Drehwinkel;
ein Modul zur Messung mindestens einer als geradlinige Bewegung klassifizierten inkrementellen Bewegung;
ein Modul zur Messung mindestens einer als Rotationsbewegung klassifizierten inkrementellen Bewegung; und
ein Modul zur Verwendung des Richtungsvektors der mindestens einen gemessenen geradlinigen Bewegung zur Schätzung der Fahrzeuglängsachse;
ein Modul zur Verwendung der Drehachse der mindestens einen gemessenen Rotationsbewegung zur Schätzung der Normalen zur Fahrzeugebene, so dass sich die Ausrichtung der Kamera relativ zum Fahrzeugkoordinatensystem aus der jeweils im Koordinatensystem der Kamera ermittelten Fahzeuglängsachse und der ermittelten Normalen zur Fahrzeugebene ergibt.

**9.** Vorrichtung nach Anspruch 8, ferner aufweisend:

ein oder mehrere Module zur Durchführung eines Verfahrens gemäß einem der Ansprüche 1 bis 7.

**10.** Computerprogramm, aufweisend Computerprogrammcode der, wenn er auf einem Computer ausgeführt wird, diesen in die Lage versetzt, ein Verfahren gemäß einem der Ansprüche 1 bis 7 durchzuführen.

**Claims**

**1.** A method for determining the orientation of a video camera attached to a vehicle in relation to the coordinate system of the vehicle:

Measuring an incremental vehicle motion in the coordinate system of the video camera based on the optical flow of the video stream of the video camera;
representing the incremental vehicle motion through a motion consisting of a linear motion component and a rotational motion, wherein the linear motion component is represented by a directional vector and wherein the rotational motion is represented by means of a rotational axis and a rotational angle;
classifying the measured incremental vehicle motion as linear motion or as rotational motion based on the determined rotational angle;

measuring at least one incremental motion classified as rotational motion; and
using the directional vector of the at least one linear motion for estimating the longitudinal axis of the vehicle;
using the rotational axis of the at least one measured rotational motion for estimating the normal of the vehicle plane so that the orientation of the camera in relation to the coordinate system of the vehicle follows from the longitudinal axis of the vehicle determined in the coordinate system of the camera and from the determined normal of the vehicle plane.

2. The method of claim 1, further comprising:

Performing multiple measurements of incremental vehicle motions;
using multiple estimations of the longitudinal axis of the vehicle and the normal for determining an improved estimation of the longitudinal axis of the vehicle and the normal.

3. The method of claim 1 or 2, further comprising:

If the rotational angle of the incremental vehicle motion is smaller than a certain threshold, classifying the motion as a linear motion;
if the rotational angle of the incremental vehicle motion is larger than a certain threshold, classifying the motion as a rotational motion.

4. The method of one of the preceding claims, comprising:

Using the normal of the plane of the linear motion or the linear motion component as a further estimation for the normal to the vehicle axis in addition to the rotational axis;
determining an estimation for the normal of the vehicle plane based on a combination of the normal of the determined linear motion or motion component and the rotational axis of the rotational motion.

5. The method of claim 4, wherein
the combination is determined based on the requirement that the normal of the plane of the linear motion or motion component determined by the measurement and the rotational axis should be parallel.

6. The method of one of the preceding claims, wherein the estimated value for the longitudinal axis of the vehicle and the normal of the vehicle are iteratively determined by repeated measurement of the incremental vehicle motion.

7. The method of claim 6, comprising:

Determining an updated value of the normal of the vehicle by measuring i as

$$i_r = X_r \sum_{m=0}^{i} (Q_r(t_r^m) + R_r(t_r^m))^{-1} r_r^m$$

with

$$X_r = X_r^{-1} + (Q_r(t_r^i) + R_r(t_r^i))^{-1}$$

as weight or information matrix and with $Q_l$ and $Q_r$ as covariance matrices of the linear vehicle axis and the normal of the vehicle, respectively, having a Gaussian process noise.

8. An apparatus for determining the orientation of a video camera attached to a vehicle in relation to the coordinate system of the vehicle, comprising:

A module for measuring an incremental vehicle motion in the coordinate system of the video camera based on the optical flow of the video stream of the video camera;
a module for representing the incremental vehicle motion through a motion consisting of a linear motion component and a rotational motion, wherein the linear motion component is represented by a directional vector and wherein the rotational motion is represented by means of a rotational axis and a rotational angle;
a module for classifying the measured incremental vehicle motion as linear motion or as rotational motion based on the determined rotational angle;
a module for measuring at least one incremental motion classified as rotational motion; and
a module for using the directional vector of the at least one linear motion for estimating the longitudinal axis of the vehicle;
a module for using the rotational axis of the at least one measured rotational motion for estimating the normal of the vehicle plane so that the orientation of the camera in relation to the coordinate system of the vehicle follows from the longitudinal axis of the vehicle determined in the coordinate system of the camera and from the determined normal of the vehicle plane.

9. The apparatus of claim 8, further comprising:

one or more modules for carrying out a method according to one of the claims 1 to 7.

10. A computer program comprising computer program code which, when being executed on a computer, enables it to carry out a method according to one of claims 1 to 7.

**Revendications**

1. Procédé de détermination de l'orientation d'une caméra vidéo montée sur un véhicule par rapport au système de coordonnées du véhicule :

mesure d'un mouvement incrémental du véhicule dans le système de coordonnées de la caméra vidéo sur la base du flux optique du flux vidéo de la caméra vidéo ;
représentation du mouvement incrémental du véhicule par un mouvement composé d'une composante de mouvement linéaire et d'un mouvement de rotation, la composante de mouvement linéaire étant représentée par un vecteur directionnel, le mouvement de rotation étant représenté par un axe de rotation et un angle de rotation ;
classement du mouvement incrémental du véhicule mesuré comme mouvement rectiligne ou comme mouvement de rotation sur la base de l'angle de rotation déterminé ;
mesure d'au moins un mouvement incrémental classé comme mouvement rectiligne ;
mesure d'au moins un mouvement incrémental classé comme mouvement de rotation ; et
utilisation du vecteur directionnel du ou des mouvements rectilignes mesurés pour estimer l'axe longitudinal du véhicule ;
utilisation de l'axe de rotation du ou des mouvements de rotation mesurés pour estimer la normale au plan du véhicule, de manière à donner l'orientation de la caméra par rapport au système de coordonnées du véhicule à partir de l'axe longitudinal du véhicule déterminé dans le système de coordonnées de la caméra et de la normale au plan du véhicule.

2. Procédé selon la revendication 1, comprenant en outre :

l'exécution de plusieurs mesures de mouvements incrémentaux du véhicule ;
l'utilisation des plusieurs estimations de l'axe longitudinal du véhicule et de la normale pour déterminer une meilleure estimation de l'axe longitudinal du véhicule et de la normale.

3. Procédé selon la revendication 1 ou 2, comprenant en outre :

si l'angle de rotation du mouvement incrémental du véhicule est inférieur à une valeur seuil définie, le classement du mouvement comme mouvement rectiligne ;
si l'angle de rotation du mouvement incrémental du véhicule est supérieur à une valeur seuil définie, le classement du mouvement comme mouvement de rotation.

4. Procédé selon l'une des revendications précédentes, comprenant :

l'utilisation de la normale au plan du mouvement rectiligne ou de la composante de mouvement rectiligne comme autre estimation pour la normale à l'axe du véhicule en plus de l'axe de rotation ;

la détermination d'une estimation pour la normale au plan du véhicule sur la base d'une combinaison de la normale au mouvement rectiligne déterminé ou à la composante de mouvement et de l'axe de rotation du mouvement de rotation.

5. Procédé selon la revendication 4, où
la combinaison est déterminée sur la base de l'exigence que la normale au plan du mouvement linéaire déterminé par mesure ou à la composante de mouvement et l'axe de rotation doivent être parallèles.

6. Procédé selon l'une des revendications précédentes, où la valeur estimée pour l'axe longitudinal du véhicule et la normale du véhicule sont déterminées itérativement par mesure répétée du mouvement incrémental du véhicule.

7. Procédé selon la revendication 6, comprenant :

la détermination d'une valeur actualisée pour la normale du véhicule par mesure i suivante :

$$\hat{t}_c = \Lambda_{\hat{t}_c}^{i-1} \sum_{n=0}^{i} (Q_t(t_c^n) + R_t(t_c^n))^{-1} t_c^n,$$

où $\Lambda_{\hat{t}_c}^{i} = \Lambda_{\hat{t}_c}^{i-1} + (Q_t(t_c^i) + R_t(t_c^i))^{-1}$ est une matrice de poids ou d'information, et $Q_t$ et $Q_r$ sont des matrices de covariance de l'axe de véhicule linéaire ou, respectivement de la normale de véhicule affectées de bruits de processus de Gauss.

8. Dispositif pour la détermination de l'orientation d'une caméra vidéo montée sur un véhicule par rapport au système de coordonnées du véhicule, comprenant :

un module de mesure d'un mouvement incrémental du véhicule dans le système de coordonnées de la caméra vidéo sur la base du flux optique du flux vidéo de la caméra vidéo ;
un module de représentation du mouvement incrémental du véhicule par un mouvement composé d'une composante de mouvement linéaire et d'un mouvement de rotation, la composante de mouvement linéaire étant représentée par un vecteur directionnel et le mouvement de rotation étant représenté par un axe de rotation et un angle de rotation ;
un module de classement du mouvement incrémental du véhicule mesuré comme mouvement rectiligne ou comme mouvement de rotation sur la base de l'angle de rotation déterminé ;
un module de mesure d'au moins un mouvement incrémental classé comme mouvement rectiligne ;
un module de mesure d'au moins un mouvement incrémental classé comme mouvement de rotation ; et
un module d'utilisation du vecteur directionnel du ou des mouvements rectilignes mesurés pour estimer l'axe longitudinal du véhicule ;
un module d'utilisation de l'axe de rotation du ou des mouvements de rotation mesurés pour estimer la normale au plan du véhicule, de manière à donner l'orientation de la caméra par rapport au système de coordonnées du véhicule à partir de l'axe longitudinal du véhicule déterminé dans le système de coordonnées de la caméra et de la normale au plan du véhicule.

9. Dispositif selon la revendication 8, comprenant en outre :

un ou plusieurs modules pour l'exécution d'un procédé selon l'une des revendications 1 à 7.

10. Programme informatique, comportant un code de programme informatique qui, lorsqu'il est exécuté sur un ordinateur, met celui-ci en situation d'exécuter un procédé selon l'une des revendications 1 à 7.

act Temp

Transformation

Aktualisierung durch Messungen

( Berechne die Richtungsachse )   ( Berechne den Drehwinkel )   ( Berechne die Drehachse )

[Drehwinkel klein genug]

[Drehwinkel groß genug]

( Aktualisiere den gewichteten Mittelwert der Vorwärtsachse )

( Aktualisiere die Normalgleichung für die Schätzung der Senkrechtachse )

Gewichteter Mittelwert der Vorwärtsachse

Linke und rechte Seite der Normalgleichung für die Schätzung der Senkrechtachse

Schätzung der Drehmatrix

( Berechne die senkrechte Achse )

( Berechne die nach rechts zeigende Achse )

( Berechne die Drehmatrix )

( Konvertiere die Drehmatrix in die gewünschte Repräsentation der Orientierung )

Gewichtete Orientierung

Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **Á. CATALÁ-PRAT ; J. RATAJ ; R. REULKE.** Self-calibration system for the orientation of a vehicle camera. *Proc. of the ISPRS Com. V Symposium: Image Engineering and Vision Metrology,* 2006, 68-73
- **S. HOLD ; S. GORMER ; A. KUMMERT ; M. MEUTER ; S. MULLER-SCHNEIDERS.** A novel approach for the online initial calibration of extrinsic parameters for a car- mounted camera. *Intelligent Transportation Systems, 2009. ITSC'09. 12th International IEEE Conference on, IEEE,* 2009, 1-6
- **M. WU ; X. AN.** An automatic extrinsic parameter calibration method for camera-on-vehicle on structured road. *Vehicular Electronics and Safety, 2007. ICVES. IEEE International Conference on, IEEE,* 2007, 1-5
- *Workshop on Intelligent Transportation,* 2010, 17-22
- **D. NISTÉR ; O. NARODITSKY ; J. BERGEN.** Visual odometry, in Computer Vision and Pattern Recognition, 2004. CVPR 2004. *Proceedings of the 2004 IEEE Computer Society Conference on, vol. 1, IEEE,* 2004, vol. 1, 1-652